(19) Europäisches Patentamt
European Patent Office
Office européen des brevets

(11) EP 1 582 537 B1

(12) EUROPEAN PATENT SPECIFICATION

(45) Date of publication and mention of the grant of the patent:
**16.06.2010 Bulletin 2010/24**

(51) Int Cl.:
***C08F 26/02*** *(2006.01)* ***C08F 26/10*** *(2006.01)*
***C08F 8/12*** *(2006.01)*

(21) Application number: **05006621.6**

(22) Date of filing: **24.03.2005**

(54) **Production method of N-Vinyl amide polymer.**

Verfahren zur Herstellung vom N-Vinyl Amid Polymer

Procédé de préparation du polymère de N-vinyl amide.

(84) Designated Contracting States:
**BE DE**

(30) Priority: **24.03.2004 JP 2004087741**
**24.03.2004 JP 2004087742**

(43) Date of publication of application:
**05.10.2005 Bulletin 2005/40**

(73) Proprietor: **NIPPON SHOKUBAI CO., LTD.**
**Osaka-shi, Osaka 541-0043 (JP)**

(72) Inventors:
- **Nakata, Yoshitomo**
**Nishinomiya-shi**
**Hyogo 663-8152 (JP)**
- **Wakao, Norihiro**
**Yokohama-shi**
**Kanagawa 230-0062 (JP)**

(74) Representative: **Brehm, Hans-Peter et al**
**Hansmann & Vogeser**
**Patent- und Rechtsanwälte**
**Maximilianstrasse 4b**
**82319 Starnberg (DE)**

(56) References cited:
**EP-A- 0 215 379** **WO-A-01/05847**
**WO-A-94/20555**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 582 537 B1

## Description

TECHNICAL FIELD

The present invention relates to a method of producing N-vinylamide polymer. N-vinylamide polymer may be used for various applications such as rawmaterials for preparing bonding agents of pressure sensitive adhesives, as raw materials for preparing coating materials, dispersants, inks and electronic parts, as well as for preparing pharmaceutical products, cosmetics and additives for food.

BACKGROUND ART

An N-vinylamide polymer has advantageous properties in aspects such as biocompatibility, safety, and hydrophilicity and provides functions as a thickening agent and as a flocculant, and is thus useful as a raw material for preparing pressure sensitive adhesives, coating materials, dispersants inks and electronic parts, as well as for preparing pharmaceutical products, cosmetics and additives for food. To provide such an N-vinylamide polymer which is suited for these various applications, improvements in quality, abilities, and safety are important.

Conventionally, in order to decrease the content of remaining N-vinylpyrrolidone (NVP), in the case of producing polyvinylpyrrolidone, a method is known, in which NVP is hydrolyzed after the polymerization reaction. In this method, hydrolysis products such as 2-pyrrolidone (2-py) and acetaldehyde are formed which sometimes may cause toxicity, malodor, and coloration. Further, a method of decreasing the NVP content by adding an initiator during the final stage of polymerizationhas become known; however in this case, hydrolysis may be promoted during polymerization reaction to generate 2-py. Also, when the polymerization is carried out in a solvent, it is possible to suppress the hydrolysis of monomers, but the K-value decreases. Therefore elimination of these problems is required.

The following methods have been disclosed for preparing conventional N-vinylamide polymer.

Japanese Kokai Publication Hei 9-110912, page 2 discloses a method of producing polyvinylpyrrolidone (PVP) having a high K-value while suppressing generation of hydrazine, an impurity, by using an azo initiator. Here, no description of the amount of 2-pyrrolidone, an impurity is given, but when polymerization is carried out according to the disclosed conditions, at least 0.05% 2-pyrrolidone may be produced during polymerization. Also, in many cases, commercially available polyvinylpyrrolidone having a K-value of 90 contains 0.1% or more 2-pyrrolidone.

The property of N-vinylamide polymer such as polyvinylpyrrolidone is generally expressed by means of the K-value. The K-value means a value calculated according to Fikentscher's formula from a relative viscosity of an aqueous solution of 1% by weight of the N-vinylamide polymer measured by means of a capillary viscometer and is supposed to have a correlation with the molecular weight of the polymer. In the case of the N-vinylamide polymer, the polymer has amido bonds and the bonds are adsorbed on a column used for gel permeation chromatography (GPC); thus, a precise molecular weight analysis is not possible, and instead thereof the K-value is employed.

Japanese Kokai Publication Sho-51-82387, pages 1-2 discloses a production method of vinylpyrrolidone polymers, by continuous polymerization of vinylpyrrolidone in an organic solvent under a pressure of 1 Bar or higher and at a high temperature in the presence of a radical polymerization initiator. Here, polymers of N-vinylpyrrolidone having a K-value of 10 to 35 and comprising a little amount of impurities are produced by polymerizing N-vinylpyrrolidon in an organic solvent under pressure.

Japanese Kokai Publication Sho-63-156810, page 2, discloses a production method of N-vinyl-2-pyrrolidone polymers, having a K-value of 10 to 100 by adding di(tertiary butyl) peroxide to an aqueous solution of 10 to 80% by weight of N-vinyl-2-pyrrolidone for polymerization and adding an adjustment agent during the polymerization. The mixture is stirred, and simultaneously the polymerization is carried out and the obtained polymers contain 50% by weight or more of polymerized N-vinyl-2-pyrrolidone and are clearly dissolved in water and an organic solvent; these polymers are said to be free of hydrazine. No description regarding the amount of 2-pyrrolidone, an impurity, is given, but when polymerization is carried out according to the disclosed conditions, at least 0.1% of 2-pyrrolidone may be produced during the polymerization.

Japanese Kokai Publication 2002-69115, pages 2, and 4 to 6 discloses a method of producing vinylpyrrolidone polymers, by adding a water-soluble organic peroxide and a sulfite salt to an aqueous solution of vinylpyrrolidone. However, in this method, the added amount of sodium sulfite is high, and the vinylpyrrolidone polymer obtained may contain approximately 0. 1% or more of sodium as an ash component relative to the polymer.

Accordingly, the method for preparing vinylpyrrolidone polymer having a lesser content of impurities such as 2-pyrrolidone and ash components and having a higher K-value, may be still improved.

Further, with respect to a method of preparing water-soluble polymer, Japanese Kokai Publication Sho-46-2094, pages 1, 2 and 5 discloses that an aqueous solution containing at least 50%byweight of amonomer is irradiated with a radiation beam in form of a thin film having a thickness of 2 cm or thinner on an underlay placed under a radiation beam source. The reaction temperature is 5 to 100 °C and the reaction is preferably carried out without supplying heat.

According to the Example, N-vinylpyrrolidone is used as the monomer, and benzoin isopropyl ether is used as a photopolymerization initiator. However, in such a method, coloration of the obtained polymer or coloration over time may not be avoided.

With respect to another method of producing a water-soluble polymer, Japanese Kokai Publication Sho-61-155405, pages 1 and 2 discloses that an acrylic polymer is obtained by supplying an aqueous monomer solution containing a cationic vinyl monomer and a nonionic surfactant in 3 to 10 mm thickness on a movable belt and radiating UV rays to the solution. Here, the surfactant is added to the aqueous monomer solution to suppress gelation of the acrylic polymer and at the same time provide the polymer comprising a high molecular weight.

Further, with respect to a water-absorptive resin production method, Japanese Kokai Publication 2000-34307, pages 2, and 7 to 10 discloses that the obtained water-containing gel-phase polymer is kept at a temperature lower than the peak temperature by at least 10 °C for a period not shorter than 30 minutes in the static aqueous solution polymerization of the monomer component. According to the Example, the polymerization is carried out by using acrylic acid and its salt as main components of monomer components by means of a movable type belt polymerization apparatus. Also, it is described that the monomer concentration is preferably 45 % or lower.

Japanese Kokai Publication Sho-52-47084, pages 1, 3 and 4 discloses that in the case of a radical polymerization of an unsaturated water-soluble monomer in a layer having a thickness of 2 to 100 mm by means of UV rays, an anthraquinone derivative and dissolved chloride ion are added to carry out the polymerization. Here, (meth) acrylamide in 50 % by weight or more is preferably used and also vinylpyrrolidone is preferable to be used. Further, the polymerization temperature is 0 to 100°C and the obtained polymer may be used as a caking additive, as a finishing agent or as a glue.

Japanese Kokai Publication Sho-10-101886, pages 2, 5 and 7 describes a gel composition containing a cross-linked polymer obtained by polymerization of monomer components comprising cyclic N-vinyllactam and an organic solvent. Here, the cross-linked polymer is obtained by static polymerization on a belt or on a tray. According to the Example, an azo initiator is used as a polymerization initiator and N-vinyl-2-pyrrolidone is used in a monomer concentration of 30 % by weight as the cyclic N-vinyllactam; the reaction is carried out at 50 °C.

Japanese Kokai Publication 2001-48938, pages 2 and 5 discloses a copolymer of N-vinylpyrrolidone and acrylic acid; according to the example, an azo initiator is used as a polymerization initiator and N-vinyl-2-pyrrolidone and sodium acrylate are used as monomer components; the reaction is carried out at 45 to 70 °C and at a monomer concentration of 35 %.

However, in the above-mentioned production methods, there still remain problems to be solved, because the formation of 2-pyrrolidone and ash components cannot be suppressed to a sufficiently low degree, or the obtained polymers are colored.

A method of removing vinylpyrrolidone from a vinylpyrrolidone polymer by treating an aqueous or alcohol solution of the vinylpyrrolidone polymer with an adsorbent is disclosed by Japanese Kokai Publication Sho-63-68609, page 1. However, using an adsorbent requires a treatment in dissolved state and the solution is limited in relation to the viscosity; further it is supposed that 2-pyrrolidone, a hydrolysis product, may not be removed sufficiently.

With respect to a method of preparing a polymer by polymerizing and introducing N-vinylpyrrolidone, Japanese Kokai Publication Hei-5-239118, pages 2 and 3 to 6 discloses that a contaminant having a low molecular weight is separated from a polymer solution at 20 to 100 °C and at a pressure from 1 to 80 Bar using an ultrafilter. Here, the treatment in dissolved state is also required, and the Example describes only a decrease ratio of 2-pyrrolidone before and after the treatment, but it is supposed that generally approximately 1 % of contaminant is formed at completion of polymerization, and the contaminant content in the polymer may amount to approximately 500 ppm. Since the polymerization is carried out by using hydrogen peroxide, the obtained polymer may be colored.

Such refining methods by adsorbent treatment and ultrafiltration are carried out in solution state, resulting in reduced quantities of the polymers treated per unit time. Further, the viscosities of the solutions treated are limited, and particularly in the case of an N-vinylamide polymer having a high K-value, the treatment has to be carried out at a low solution concentration resulting in further decrease of the productivity; therefore these methods are not practical. Accordingly, these inconveniences have to be overcome in order to improve the productivity, and to produce the N-vinylamide polymer in a quality to be suited for uses such as cosmetics and pharmaceutical products.

With respect to a hydrophilic polymer having a low remaining monomer content, Japanese Kokai Publication Sho-64-26604, pages 1 to 2, 4 and 6 to 12, discloses that a water-containing gel-phase polymer is dried by contacting with a gas containing at least steam and having a dew point of 50 to 100 °C at a temperature of 80 to 250 °C. According to the Example, a gel-phase polymer having a water content of 25 % or higher is obtained from an acrylic acid salt and acrylamide as main components of monomer and dried until the solid concentration reaches at most 96 %; the remaining monomer content in the obtained hydrophilic polymer is 20 to 2200 ppm.

With respect to separating a trace amount of vinyl chloride monomer from a vinyl chloride resin powder, Japanese Kokai Publication So-51-126284, pages 1 to 3, discloses that the vinyl chloride resin powder wetted with a water-based solvent is heated, whereby the vinyl chloride monomer present in the water-based solvent is evaporated and separated at a normal or at a reduced pressure. The description is silent whether this N-vinylamide polymer may be used for

cosmetics and pharmaceutical products; there is still room to improve the production method to become suited for such a polymer production.

## SUMMARY OF THE INVENTION

In view of the above given state of the art, it is an object of the present invention to provide a method of preparing N-vinylamide polymer having a decreased content of impurities such as remaining monomers and hydrolysis products of the monomers and having reduced coloration, a higher K-value, and may be preferably used in a variety of fields such as cosmetic and pharmaceutical products.

The inventors have made various investigations concerning a method of producing N-vinylamide polymer and have found that the N-vinylamide polymer having only a small content of impurities and comprising a high K-value may be obtained by carrying out a polymerization reaction in a reaction solution having a monomer concentration in a specified range and using a specified initiator.

Preferably, the polymerization is carried out within a short time by carrying out the polymerization in a specified temperature range. Accordingly, a hydrolysis reaction of the used monomer is reduced, enabling to obtain the N-vinylamide polymer having further decreased content of impurities.

Further, coloration and impurity content may be further reduced without occurrence of side reaction or fume generation when performing the polymerization of the reaction solution in the state of a layer having specified value of depth.

Further, the method of producing N-vinylamide polymer, may preferably comprise a step of drying in a solid state such as a powder having a particle diameter in a specified range, or in form of a film having a thickness in a specified range and in an environment having a specific range of a relative humidity. The polymer in a solid state may be sufficiently plasticized with water; accordingly, the remaining monomer may freely move in the polymer and be evaporated easily from the surface, resulting in remarkable reduction of the content of remaining monomer. Unlike to a conventional method of afterwards adding an initiator to decrease the content of monomer, the addition of an unnecessary compound is not required, and consequently, the content of impurity in the polymer may be sufficiently decreased.

According to a preferred aspect of the present invention, refinement by treating the N-vinylamide polymer in solid state is innovative and the refining technique to reduce the content of remaining monomer such as N-vinylpyrrolidone and hydrolysis products of the monomer such as 2-pyrrolidone to 100 ppm or lower is also innovative. When performing the conventional refining in a dissolved state, said refining is limited in the viscosity of the solution, and the productivity is insufficient, particularly in the case of product having a high K-value, it is necessary to increase the dilution ratio. Contrarely, in the case of the present invention, the impurities may be sufficiently removed without any limit with respect to the K-value and the viscosity to result in sufficiently increased productivity. The content of impurities maybe reduced so far and the coloration may be suppressed so far to provide N-vinylamide polymer suited for uses such as cosmetics and pharmaceutical products.

Thus, the present invention provides a method of producing N-vinylamide polymer comprising a step of polymerizing a monomer component in a water-based solvent,
wherein said polymerization step is carried out by adjusting a monomer concentration in a reaction solution to 55 to 90 % by weight and using an azo initiator and/or hydrogen peroxide.

## BRIEF DESCRIPTION OF THE DRAWINGS

Fig. 1 is a schematic drawing of a reaction apparatus employed in the Examples.
Fig. 2 is a schematic drawing of a reaction apparatus employed in the Examples.

## DETAILED DESCRIPTION OF THE INVENTION

The present invention will, hereinafter be described in more detail.

The method of producing an N-vinylamide polymer according to the present invention is a method suited to prepare an N-vinylamide polymer having any K-value, and is not especially limited in the content of impurities in the N-vinylamide polymer to be obtained, and is enabled to prepare an N-vinylamide polymer having a specified K-value and a sufficiently decreased content of impurities such as 2-pyrrolidone and is advantageous with respect to productivity and economical efficiency.

In this invention, when the monomer concentration in a reaction solution is controlled to 55 to 90 % by weight (mass%), the obtained N-vinylamide polymer is usable in a variety of fields such as cosmetics and pharmaceutical products. The lower limit is 55 % by weight and is more preferably 60 % by weight. The upper limit is preferably 85 %

by weight and more preferably 8 % by weight. The preferred range is 55 to 85 % by weight, even more preferred is 60 to 80 % by weight.

In the above-mentioned polymerization step, an azo initiator and/or hydrogen peroxide is used as a polymerization initiator. The azo initiator is preferably used when looking for a polymer having a K-value of 60 or even higher; hydrogen peroxide is preferably used when looking for a polymer having a K-value not higher than 60.

The amount of polymerization initiator is preferably 0.001 to 10 % by weight, more preferred 0.005 to 5 % by weight, and even more preferred 0.01 to 1 % by weight referring to the weight of the monomer component, equals 100 % by weight.

The azo initiator, is preferably used in an amount of from 0.01 to 1 % by weight of the monomer component; this embodiment is one of the preferred embodiments of the present invention.

In the above-mentioned polymerization step, a thermal and/or photo-polymerization is preferably performed.

The polymerization conditions of the thermal polymerization may be properly set depending on the composition of the monomer component and of the solvent, a preferred polymerization temperature is 0 to 250 °C, more preferred 20 to 200 °C, and even more preferred 40 to 150 °C. In the case of a high temperature reaction, the reaction pressure may be a normal pressure or a higher pressure, but if a strict temperature control is required, then a normal pressure is preferred. A preferred polymerization time is 5 to 120 minutes, more preferred 5 to 60 minutes, even more preferred 10 to 50 minutes, and still even more preferred 10 to 40 minutes.

The photopolymerization is preferably carried out by means of UV ray radiation. As a suited apparatus for UV ray radiation may be mentioned: a high pressure mercury lamp, a low pressure mercury lamp, a metal halide lamp, a fluorescent chemical lamp, and a fluorescent blue-emitting lamp. The radiation intensity of UV rays may be properly set depending on the monomer concentration and is preferably set to 10 to 100 $W/m^2$ ; more preferred is 20 to 50 $W/m^2$. A preferred radiation time is 1 to 60 minutes; even more preferred is 5 to 30 minutes.

In a preferred embodiment of the above-mentioned polymerization step, the temperature of the reaction solution is maintained at 100 °C or higher for a period of 3 to 45 minutes. The N-vinylamide polymer hardly causes gelation even at 100 °C or higher, and such operation conditions produce the N-vinylamide polymer in a form suited for various uses. A more preferred holding time is 5 to 40 minutes, and is even more preferred is 10 to 35 minutes. The temperature of the reaction solution is increased by heat transferred from outside and by polymerization heat. According to the present invention, since the monomer concentration is high, the temperature is kept at 100 °C or higher even under a normal pressure.

To keep the temperature of the reaction solution at 100 °C or higher means a state where the reaction solution is kept continuously at 100 °C or higher in any period from starting to finishing the polymerization reaction.

In the present invention, as described above, it is effective to maintain the reaction solution at 100 °C or higher for a period of 3 minutes or longer for shortening the reaction time; accordingly, any generation of 2-pyrrolidone is suppressed and consequently, colorization is prevented. In a conventional technique, a reaction temperature of 100°C or higher in the case of a high concentration polymerization just like belt polymerization is considered undesirably, because it causes gelation; but in the present invention, it has been found that limiting the monomer component to N-vinylamide monomer provides a desirable effect of suppressing side reactions due to the reaction temperature of 100°C or higher; such a high reaction temperature was completely unexpected before.

In the present invention, it is preferred to maintain the depth of the reaction solution containing a water-based solvent and a monomer component during the polymerization reaction at 50 mm or shallower. This mode of polymerization reaction enables a uniform polymerization without the need of stirring the reaction solution; even in the case of a reaction solution havingahighviscosity, a sufficient polymerization is obtained, and the removal of solvent may also be carried out easily. Further a contamination by impurities may be suppressed.

Performing the polymerization reaction at a depth of the reaction solution of 50 mm or shallower means a mode of polymerization wherein the reaction solution is spread thinly into a reaction vessel; for example, it is preferred to carry out this mode of polymerization in a standing operation without fluidizing the reaction solution by stirring. Further, the polymerization may be carried out in a batch wise manner or in a continuous manner; in the case of a continuous polymerization, the belt polymerization mode is preferred for example by means of a belt conveyer type continuous polymerization apparatus. A reaction vessel, wherein the reaction solution is maintained at a depth of 50 mm or shallower may be employed; further a plate-like equipment having no noticeable depth may be used in the case where the reaction solution has a high viscosity.

A depth of the reaction solution exceeding 50 mm may cause bumping; the reaction compounds are scattered, or abnormal heat generation may occur in some cases; the possible result is an insufficient decrease of the K-value. More preferred is a depth of 35 mm or shallower, even more preferred is a depth of 25 mm or shallower, and still further more preferred is a depth of 15 mm or shallower.

The above-mentioned method provides a N-vinylamide polymer essentially consisting of N-vinylamide monomer units, and the method may comprise a step of treating the N-vinylamide polymer in a powder state wherein the powder particles comprise a particle size of 500 μm or smaller, or in a film-like state wherein the film may comprise a thickness

of 10 mm or thinner, wherein both steps are performed in an environment condition comprising a relative humidity of 50 % or higher; a method comprising these steps forms a preferred embodiment of the present invention.

The above-mentioned method is also suited to provide N-vinylamide polymer having any K-value, and is not particularly limited in the content of impurities contained in the N-vinylamide polymer obtained, but this method is advantageous with respect to productivity. Refining the N-vinylamide polymer by such a method sufficiently removes impurities contained in the N-vinylamide polymer to obtain the N-vinylamide polymer in a quality suited for various uses such as pharmaceutical products and cosmetics.

In the present invention, the N-vinylamide polymer may be refined in form of a powder comprising particles having a particle diameter of 500 μm or smaller, or in form of a film having a film thickness of 10 mm or smaller.

In the case of refining the N-vinylamide polymer in form of a powder, the particle diameter is 500 μm or smaller; if the particle diameter exceeds 500 μm, the impurities may not be removed sufficiently. A preferred particle diameter is 400 μm or smaller, more preferred 300 μm or smaller, and even more preferred 200 μm or smaller. In the case of refining the N-vinylamide polymer in form of a film, the thickness of the film is 10 mm or smaller; if the film thickness exceeds 10 mm, the impurities may not be removed sufficiently. A preferred film thickness is 5 mm or smaller, more preferred 1 mm or smaller, and even more preferred 0.1 mm or smaller.

The above-mentioned particle diameter is an average particle diameter, and the particle diameter is measured according to dry sieving test method defined as "Sieving Test Method of Chemical Products" of JIS K0069.

In these optional refining steps according to the present invention, the N-vinylamide polymer is treated in an environment condition comprising a relative humidity 50 % or higher. If the relative humidity is lower than 50 %, then the solid state polymer may not be plasticized sufficiently. The relative humidity is preferably 55 % or higher and more preferably 60 % or higher. It is also preferred to have a relative humidity of 90 % or lower and more preferred of 80 % or lower.

The temperature in the above-mentioned treatment is preferably 50 to 150 °C. When it is lower than 50 °C, it may take a long time to remove the impurities; when the temperature exceeds 150 °C, adverse effects on physical properties, for example, decrease of molecular weight may be caused. The lower temperature limit is preferably 60 °C and more preferred 70 °C. The upper temperature limit is preferably 120 °C and more preferred 100 °C. The range is preferably 60 to 120 °C and more preferred 70 to 100 °C.

The treatment time in the above-mentioned refining step may be properly set depending on the treatment conditions and impurity contents; for example, a treatment time of 15 minutes to 5 hours is preferred, more preferred 30 minutes to 4 hours, and even more preferred 45 minutes to 3 hours.

The treatment of N-vinylamide polymer under the above-mentioned relative humidity condition may include (1) a method of treating the N-vinylamide polymer in a static state; (2) a method of treating the N-vinylamide polymer in a mode of moving the polymer; and (3) a method combining these both modes. In the fore-mentioned static method (1), the N-vinylamide polymer may be spread and kept standing, for example, in a treatment container or in a treatment apparatus in the case of powdery N-vinylamide polymer. In the case of the film-like state, the film may be kept standing while hindered from overlapping with other films; or the film is kept still while hindered from contact with wall faces of a treatment container; or the film is treated in a manner combining these treatment modes.

In the fore-mentioned movable mode method (2), the powdery N-vinylamide polymer may be stirred by a stirring blade, or may be fluidized under a gas current or may be moved by rotating or swinging a treatment container, or may be treated in a manner which combines these modes. When fluidizing the polymer under a gas current, it is preferred to move the powder by leading or blowing steam on to the powder. In the case of a film-formingN-vinylamide polymer it is preferred to move the film by blowing steam on to the film.

In the case of powdery N-vinylamide polymer, the N-vinylamide polymer is preferably stirred and/or fluidized under a gas current, which prevents fusion (blocking) of the N-vinylamide polymer and sufficiently removes remaining monomers.

Usable apparatuses include a box type drying apparatus, a fluidizing tank drying apparatus, a conical drier.

The above-mentioned method of producing N-vinylamide polymer according to the present invention may provide a N-vinylamide polymer mainly consisting of N-vinylamide monomer units and showing the following features:

- a K-value of 60 or higher;
- a content of hydrolysis products of N-vinylamide monomer of 0.02% by weight or less;
- a content of ashes of 0.1% by weight or less; and
- a 10 % aqueous solution may show a hue of 10 or less when measured according to JIS K0071.

If the K-value is lower than 60, than basic functions desired for various uses may not be obtained in a sufficient extent. The lower limit is preferably 70, more preferred 80 and even more preferred 90. The upper limit may reach 250 and is preferably 200, more preferred 150, and even more preferred 120. The range is preferably 70 to 200, more preferred 80 to 150, and even more preferred 90 to 120.

The above-mentioned K-value can be calculated according to the following Fikentscher's formula from the relative viscosity of an aqueous solution of 1 % by weight of the N-vinylamide polymer measured by a capillary viscometer at 25 °C:

$$\log\eta_{rel}/C = [(75K_0^2)/(1 + 1.5K_0C)] + K_0,$$

wherein:

$K = 1000K_0$;

C is the weight (g) of N-vinylamide polymer in 100 ml solution; and

$\eta_{rel}$ is the measured relative viscosity.

If the content of the hydrolysis products of the N-vinylamide monomer exceeds 0.02% by weight, toxicity, malodor, or coloration may not be sufficiently reduced, thus impairing the suitability of the polymer for uses such as cosmetics or pharmaceutical products. Preferably the content is 0.002 % by weight or lower, more preferred 0.0002 % by weight or lower, even more preferred 0.00002 % by weight or lower, and still even more preferred, the N-vinylamide polymer is practically free from any hydrolysis products of the N-vinylamide monomer.
The fore-mentioned hydrolysis products are compounds generated by hydrolyzing the N-vinylamide monomer; for example, in the case of using N-vinylpyrrolidone as the monomer, 2-pyrrolidone, and acetaldehyde are exemplary hydrolysis products.
The content of those hydrolysis products formed from the N-vinylamide monomer can be quantitatively determined by liquid chromatography.
In the case, when the polymer is dissolved in an organic solvent and when the content of ashes exceeds 0.1 by weight, then any turbidity may not be sufficiently decreased, and the suitability of the polymer as a pharmaceutical raw material may be questionable. The content of ashes is preferably 0.08 % by weight or lower, more preferred 0.05 % by weight or lower, even more preferred 0.02 % by weight or lower, and still even more preferred, the polymer is practically free from ashes.
The here conferred ashes mean non-combustible residues remaining after combustion of the N-vinylamide polymer and essentially contain inorganic substances and their oxides. Examples of these inorganic substances may include sodium atoms containing substances, potassium atoms containing substances, magnesium atoms containing substances, calcium atoms containing substances.
The ashes content may be measured according to a measurement method of intensively burning residues as defined by Japanese Pharmacopoeia.
A 10 % aqueous solution of the N-vinylamide polymer may comprise a hue of 10 or less measured according to JIS K0071. When this hue exceeds 10, then the polymer may be insufficient for uses such as cosmetics or pharmaceutical products. A preferred hue is 8 or lower and more preferred 5 or lower.
The fore-mentioned hue is defined by APHA and can be measured according to JIS K0071.
The content of N-vinylamide monomer in the above-mentioned N-vinylamide polymer is preferably 1.5 % by weight or lower. If this content exceeds 1.5 % by weight, then the content of impurities produced by hydrolysis may not be sufficiently low. More preferred is a content of 1.0 % by weight and even more preferred is a content of 0.5 % by weight.
The content of the N-vinylamide monomer can be measured in a similar manner as the content of the above-mentioned hydrolysis products of the N-vinylamide monomer.
The method according to the present invention may provide a N-vinylamide polymer comprising a content of N-vinylamide monomer of 10 ppm or less and comprising a content of hydrolysis products of N-vinylamide monomer of 100 ppm or less.
If the content of N-vinylamide monomer exceeds 10 ppm, then the polymer may be insufficient for suitable uses such as cosmetics or pharmaceutical products. A preferred content is 8 ppm or lower, more preferred 5 ppm or lower, even more preferred 3 ppm or lower, and still even more preferred, the N-vinylamide polymer is practically free from any N-vinylamide monomer.
The content of the N-vinylamide monomer can be quantitatively determined by liquid chromatography.
When the content of hydrolysis products of the N-vinylamide monomer exceeds 100 ppm, then the toxicity, malodor, or coloration may not be sufficiently low impairing the suitability of the polymer for uses such as cosmetics, pharmaceutical products. A preferred content is 50 ppm or lower, more preferred 10 ppm or lower, evenmorepreferred 1 ppm or lower, and still more preferred, the N-vinylamide polymer is practically free from the hydrolysis products of the N-vinylamide monomer.

Conventional N-vinylamide polymers are easily colored polymers due to impurities as compared with other polymers obtained, for example, from acrylic acid salts and acrylamides as main monomer components; but in the present invention, such coloration is sufficiently reduced.

The N-vinylamide polymer obtained by the method according to the present invention may comprise any form, such as powder, granule, flake, film, gel, or may form a liquid. In the case of powdery N-vinylamide polymer the measurement of the contents of the N-vinylamide monomers and their hydrolysis products may be performed by dissolving the powder in a proper solvent to obtain a liquid.

The N-vinylamide polymer is obtained by polymerizing N-vinylamide monomer(s) and is essentially consisting of N-vinylamide monomer units having a structure as represented by the following formula (1);

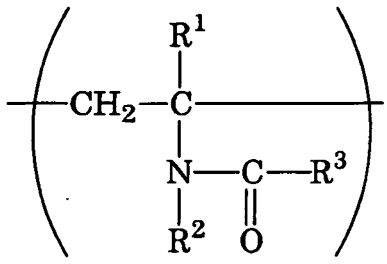

(1)

wherein:

$R^1$ represents a hydrogen atom or a methyl group;
$R^2$ and $R^3$ may be same or different and respectively represent a hydrogen atom, a methyl group, or an ethyl group; further, $R^2$ and $R^3$ may be bonded to form an alkylene group having 3 to 5 carbon atoms.

The N-vinylamide monomers are preferably represented by the following formula (2);

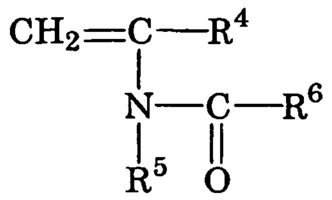

(2)

wherein:

$R^4$ represents a hydrogen atom or a methyl group;
$R^5$ and $R^6$ may be same or different and respectively represent a hydrogen atom, a methyl group, or an ethyl group; further, $R^5$ and $R^6$ may be bonded to form an alkylene group having 3 to 5 carbon atoms.

Preferred monomers as defined by the above-mentioned formula (2), are N-vinylacetamide, N-methyl-N-vinylacetamide, N-vinylformamide, N-methyl-N-vinylformamide, N-vinylpropionamide, N-vinylpyrrolidone, N-vinylpiperidone, and N-vinylcaprolactam; here, one or two or more of these compounds may be used. Among these, compounds, N-vinylpyrrolidone is preferred.

The content of the above-mentioned N-vinylamide monomer is preferably 25 % by weight or more when referring to 100 % by weight of all monomer components. When the content is less than 25 % by weight, the properties such as hydrophilicity and adsorptive property derived from the N-vinylamide monomer unit may be impaired. The content is more preferably 50 % by weight or more and even more preferred 75 % by weight or more. Particularly, all monomer components are preferably N-vinylamide monomers.

The above-mentioned monomer components may contain other copolymerizable monomers and for example, one or two or more kinds of the following monomers may be used:

(1) (meth)acrylic acid esters such as methyl (meth)acrylate, ethyl (meth)acrylate, butyl (meth)acrylate, cyclohexyl

(meth)acrylate, and hydroxyethyl (meth)acrylate;
(2) (meth)acrylamide derivatives such as (meth)acrylamide, N-monomethyl(meth)acrylamide, N-monoethyl(meth) acrylamide, and N,N-dimethyl(meth)acrylamide;
(3) basic unsaturated monomers, their salts or quaternary compounds such as dimethylaminoethyl (meth)acrylate, dimethylaminoethyl(meth)acrylamide, vinylpyridine, and vinylimidazole;
(4) iminoethers such as vinyloxazoline and isopropenyloxazoline;
(5) carboxyl group-containing unsaturated monomers and their salts such as (meth) acrylic acid, itaconic acid, maleic acid, and fumaric acid;
(6) hydroxyl group-containing unsaturated monomers such as 2-hydroxyethyl (meth) acrylate, 2-hydroxypropyl (meth) acrylate, 3-hydroxypropyl (meth) acrylate, 2-hydroxybutyl (meth) acrylate, 3-hydroxybutyl (meth) acrylate, 4-hydroxybutyl (meth) acrylate, methyl-2-(hydroxymethyl)acrylate, ethyl-2-(hydroxymethyl)acrylate, polyethylene glycol mono (meth) acrylate, polypropylene glycol mono (meth) acrylate, tris(hydroxyethyl)isocyanuric acid mono (meth)acrylate, tris(hydroxyethyl)isocyanuric acid di(meth)acrylate, pentaerythritol mono(meth)acrylate, pentaerythritol di(meth)acrylate, and pentaerythritol tri(meth)acrylate;
(7) unsaturated anhydrides such as maleic anhydride and itaconic anhydride;
(8) vinyl esters such as vinyl acetate and vinyl propionate;
(9) vinylethylene carbonate and its derivatives;
(10) styrene and its derivatives;
(11) ethyl (meth) acrylic acid-2-sulfonate and its derivatives;
(12) unsaturated sulfonic acid and its derivatives such as vinylsulfonic acid and its derivatives,
(meth)acrylamidomethylsulfonic acid,
(meth)acrylamidoethylsulfonic acid, and
(meth)acrylamidopropanesulfonic acid;
(13) vinyl ethers such as methyl vinyl ether, ethyl vinyl ether, and butyl vinyl ether;
(14) olefins such as ethylene, propylene, octene, and butadiene; and
(15) glycidyl group-containing unsaturated monomers such as glycidyl (meth)acrylate.

As suited polymerization methods to obtain the N-vinylamide polymer, an aqueous solution polymerization method, a solution polymerization method in an organic solvent, a reverse phase suspension polymerization method, an emulsion polymerization method, a precipitation polymerization method, and a bulk polymerization method and the like may be mentioned, and the reaction conditions may be properly set depending on the polymerization methods. In these polymerization methods, thermal and/or photo-polymerization is preferred.

The mode of polymerization may be stirring polymerization mode, static polymerization mode, or belt polymerization mode.

When in the above-mentioned stirring polymerization mode the concentration and the viscosity of the reaction solution is too high to stirr the reaction solution by a common stirring pan or to reach a heat removal, then it is preferred to use an apparatus providing a powerful stirring force such as a kneader or an extruder to perform a continuous reaction.

As the fore-mentioned kneader, an apparatus having parallel arranged blades inside of a container and enabled to completely mix even highly viscous materials within a short time by applying external force such as compressive, shearing, and tensile force to the materials by the rotation of the blades and kneading repeatedly; further the apparatus may be equipped to control the material temperature inside the container by heating or cooling the outside of the container or the blade. The extruder is a cylindrical apparatus provided with a screw; there are uniaxial extruders and biaxial extruders and they are both suited to mix materials comprising high viscosity such as the materials of the present invention.

In the present invention, not only the polymerization reaction is carried out by using the kneader or extruder but also a subsequent post-treatment or deformation step may be carried out by using the kneader or extruder. For example, a completion of the polymerization may be reached by adding and mixing an acidic substance together with the reaction solution by the kneader or extruder to hydrolyze the remaining monomer in a slight amount.

In the above-mentioned belt polymerization modus, a continuous polymerization can be performed on a movable belt. The belt material is not especially limited and it may be made of a metal or a glass cloth and the like; a belt processed with fluorine or Teflon® (Registered Trademark) on the surface is preferred. Belt polymerization apparatuses which cover reaction blocks to control the oxygen concentration in the reaction blocks are preferred; those apparatuses which heat or cool the belts from the rear face side and/or the upper side are also preferred. The polymer obtained by the belt polymerization process may subsequently be crushed to form a powder or may be modified by post-treatment with a kneader or an extruder.

The belt polymerization modus is preferred, because no stirring of the reaction solution is required; the viscosity of the reaction solution and the monomer concentration may be set high, resulting in an easy removal of the solvent.

As a solvent to be used in the above-mentioned aqueous solution polymerization method, water is mainly used and other water-based solvents may be included. The water-based solvents means mixed solvents of one or two or

more compounds compatible with water and enabled to provide mixed solvents by mixing such compounds with water in a manner that water is a main component. The compound compatible with water are preferably alcohols such as methanol, ethanol, and 1-propanol; diols such as ethylene glycol; polyalcohols, e.g. triols such as glycerin. Additionally, solutions obtained by mixing reaction products compatible with these compounds may be used as the water-based solvents. Among these solvents, water, or mixed solvents of water and alcohols are preferred.

Further, in the above-mentioned polymerization reaction, a chain transfer agent may be used if necessary.

The N-vinylamide polymer as obtainable by the method according to the present invention has a constitution as described above and provides advantages in aspects of biocompatibility, safety, and hydrophilicity, and may sufficiently provide functions of a thickening agent, of a flocculant; it is thus useful as a raw material for preparing pressure sensitive adhesives, coating materials, dispersants, inks, electronic parts, as well as pharmaceutical products, cosmetics and additives for food. The method according to the present invention is suited to produce the N-vinylamide polymer in a form and quality suited for a variety of fields.

BEST MODE FOR CARRYING OUT THE PRESENT INVENTION

The present invention will, hereinafter, be described in more detail with reference to Examples. "Part" and "%" means "part by weight" and "% by weight", respectively, in absence of other statements.

Method for K-value measurement:

The K-value was calculated according to the following formula from the measured relative viscosity of an aqueous solution of 1 % by weight of the N-vinylamide polymer measured by a capillary viscometer at 25 °C:

$$\log\eta_{rel}/C = [(75K_0^2)/(1 + 1.5K_0C)] + K_0,$$

wherein:

$K = 1000K_0$;
C is the weight (g) of N-vinylamide polymer in 100 ml of the solution; and
$\eta_{rel}$ is the measured relative viscosity.

Method of measurement of residual amounts of N-vinylpyrrolidone and 2-pyrrolidone:

Quantitative determination was carried out by liquid chromatography.

Method of measurement of ashes:

Measurement was carried out according to a method wherein the residues were intensely burned as defined by Japanese Handbook of Pharmacopoeia.

APHA measurement method:

Measurement was carried out according to JIS K0071.

Example 1:

This example was carried out by using a polymerization reaction apparatus as shown in Fig. 1. An aqueous monomer solution was prepared containing 60 parts N-vinylpyrrolidone and 40 parts ion-exchanged water, and nitrogen was bubbled through the solution to sufficiently remove dissolved oxygen. The aqueous monomer solution was fed through a supply port 1 to a reaction vessel, the inside thereof was previously replaced by nitrogen and was heated to a surface temperature of 100 °C; an initiator solution obtained by dissolving 0.06 parts azo initiator V-59 (trade name; manufactured by Wako Pure Chemical Industries, Ltd.; that is 2,2'-azobis(2-methylbutyronitrile)) in 1 part isopropyl alcohol (IPA) was subsequently fed through a supply port 2. The depth of the reaction solution in the reaction vessel was kept at 10 mm. Polymerization was carried out under nitrogen flow and the temperature of the reaction solution reached 100 °C in approximately 5 minutes. Thereafter, a temperature of 100 °C or higher was maintained for 15 minutes to obtain a colorless, transparent, and slightly soft solid cake.

The obtained cake of polyvinylpyrrolidone (PVP) was analyzed to find a K-value of 99.2, a content of 5300 ppm N-vinylpyrrolidone and a content of 0.2 ppm 2-pyrrolidone. The APHA of a 10 % aqueous solution was 5, and the content of ashes was 200 ppm. Table 1 shows these results.

Example 2:

The reaction was essentially carried out in the same manner as in Example 1, except that the amount of the azo initiator was changed to 0.12 parts. The temperature of the reaction solution reached 100 °C in approximately 5 minutes. Thereafter, a temperature of 100 °C or higher was maintained for 12 minutes to obtain a colorless, transparent, and slightly soft solid cake. The analysis confirmed a K-value of 95.3, a content of 2400 ppm N-vinylpyrrolidone and a content of 0.1 ppm 2-pyrrolidone. The APHA of a 10 % aqueous solution was 5, and the content of ashes was 200 ppm. Table 1 shows these results.

Example 3:

The reaction was essentially carried out in the same manner as in Example 1, except that the total amount of the aqueous monomer solution was adjusted and arranged to provide a liquid depth of the reaction solution of 15 mm. The temperature of the reaction solution reached 100 °C in approximately 5 minutes. Thereafter, a temperature of 100 °C or higher was maintained for 17 minutes to obtain a colorless, transparent, and slightly soft solid cake. The analysis confirmed a K-value of 100.0, a content of 5700 ppm N-vinylpyrrolidone and a content of 0.2 ppm 2-pyrrolidone. The APHA of a 10 % aqueous solution was 5, and the content of ashes was 200 ppm. Table 1 shows these results.

Example 4:

This Example was carried out by using a polymerization reaction apparatus as shown in Fig. 2. An aqueous monomer solution was prepared containing 70 parts N-vinylpyrrolidone, 30 parts ion-exchanged water, and 0.14 parts azo initiator (V-59); nitrogen was bubbled through the solution to sufficiently remove dissolved oxygen. The aqueous monomer solution was fed through a supply port 3 to a reaction vessel the inside thereof was previously replaced by nitrogen. The depth of the reaction solution in the reaction vessel was kept at 4 mm. An intensive UV ray radiation of 20 $W/m^2$ dose was performed for 10 minutes under nitrogen flow to obtain a colorless, transparent, and hard resin cake.

The obtained cake of polyvinylpyrrolidone (PVP) was analyzed to find a K-value of 92.1, a content of 4200 ppm N-vinylpyrrolidone; no 2-pyrrolidone was detected. The APHA of a 5% aqueous solution was 5, and the content of ashes was 200 ppm. Table 1 shows these results.

Example 5:

The reaction was essentially carried out in the same manner as in Example 4, except that the amount of N-vinylpyrrolidone was changed to 60 parts, and the amount of ion-exchanged water was changed to 40 parts. Consequently the K-value was 93.1, the N-vinylpyrrolidone content was 11000 ppm, and no 2-pyrrolidone was detected. The APHA of a 5% aqueous solution was 5 and the content of ashes was 200 ppm. Table 1 shows these results.

Table 1

| | | Example 1 | Example 2 | Example 3 | Example 4 | Example 5 |
|---|---|---|---|---|---|---|
| | | Heating polymerization | | | UV polymerization | |
| Condition | Polymerization concentration (%by weight) | 60 | 60 | 60 | 70 | 60 |
| | Initiator (%by weight to monomer) | 0.1 | 0.2 | 0.1 | 0.2 | 0.2 |
| | Solution depth (mm) | 10 | 10 | 15 | 4 | 4 |
| | Time at 100°C or higher (min) | 15 | 12 | 17 | - | - |

(continued)

| | | Example 1 | Example 2 | Example 3 | Example 4 | Example 5 |
|---|---|---|---|---|---|---|
| | | Heating polymerization | | | UV polymerization | |
| Results | K-value | 99.2 | 95.3 | 100.0 | 92. 1 | 93. 1 |
| | NVP(ppm) | 5300 | 2400 | 5700 | 4200 | 11000 |
| | 2 - py(ppm) | 2 | 0.1 | 0.2 | ND | ND |
| | Ashes (ppm) | 200 | 200 | 200 | 200 | 200 |
| | APHA | 5 | 5 | 5 | 5 | 5 |

In Table 1, "ND" means not detected.

Comparative Example 1:

The reaction was essentially carried out in the same manner as in Example 1, except that the depth of the reaction solution was changed to 55 mm. In this case, the reaction solution caused bumping to make it impossible to carry out a safe reaction operation.

Comparative Example 2:

The reaction was essentially carried out in the same manner as in Example 1, except that the initial monomer concentration of the reaction solution was changed to 40 %. The reaction promoted slowly, and it took 1 hour or longer to achieve a polymerization ratio of 90 % or higher. The content of 2-pyrrolidone was 300 ppm.

Example 6:

An aqueous monomer solution was prepared containing 60 parts N-vinylpyrrolidone and 40 parts ion-exchanged water; nitrogen was bubbled through the solution to sufficiently remove dissolved oxygen. This aqueous monomer solution was fed with a flow rate of 1000 g/min. Further, a 5 % isopropyl alcohol (IPA) solution of 2,2'-azobis(2-methylbutyronitrile) was fed at 12 g/min under line-mixing to a movable belt type polymerization apparatus under nitrogen atmosphere. The temperature of the belt surface was adjusted to 80 °C by heating the belt from the rear side. The depth or thickness of the aqueous solution was 20 mm. The movable belt was moved at a speed of 100 mm/min and the temperature of the reaction system exceeded 100 °C after 8 minutes and was kept continuously at 100 °C or higher for approximately 10 minutes.

The obtained PVP was analyzed to find a K-value of 98.0, a content of NVP of 4000 ppm, a content of 2-pyrrolidone of 0.2 ppm, a content of ashes of 100 ppm, and 10 % APHA of 5.

Example 7:

An aqueous monomer solution containing 40 parts N-vinylpyrrolidone and 60 parts ion-exchanged water was fed to a double-arm type kneader made of a stainless steel, equipped with a jacket having 13 L inner capacity and further equipped with two sigma type blades having a rotary diameter of 120 mm. The monomer solution was degassed by means of nitrogen gas, and the ambient gas of the reaction system was replaced by nitrogen. Water at 20 °C was circulated through the jacket to control the temperature, and 0.04 parts azo initiator (V-59) were added. The reaction was carried out under stirring condition for a period of 60 minutes; in this case, the highest temperature reached 90 °C.

The obtained PVP was analyzed to find a K-value of 92.0, a content of NVP of 4500 ppm , a content of 2-pyrrolidone 10 ppm, a content of ashes of 100 ppm, and a 10% APHA of 5.

Example 8:

This Example was carried out by using a polymerization reaction apparatus as shown in Fig. 1. An aqueous monomer solution was prepared containing 60 parts N-vinylpyrrolidone and 40 parts ion-exchanged water; nitrogen was bubbled through this solution to sufficiently remove dissolved oxygen. The aqueous monomer solution was fed through a supply port 1 to a reaction vessel the inside thereof was previously replaced by nitrogen and heated to a surface temperature of 100 °C. An initiator solution obtained by dissolving 0.06 parts azo initiator (V-59) in 1 part ethanol was

fed through a supply port 2. The depth of the reaction solution in the reaction vessel was kept at 10 mm. A polymerization reaction was carried out under nitrogen flow, and the temperature of the reaction solution reached 100 °C in approximately 5 minutes. Thereafter, a temperature of 100 °C or higher was maintained for 15 minutes to obtain a colorless, transparent, and sheet-like polyvinylpyrrolidone.

The obtained polyvinylpyrrolidone was pulverized by means of a pulverizer and sieved by means of a vibrating sieve. A powder having an average particle diameter of 150 μm was defined as a powder 1; a powder having an average particle diameter of 700 μm was defined as a powder 2 to use for evaluation.

Examples 9 and 10 and Comparative Examples 3 and 4:

Each a small amount of the powder 1 and of the powder 2 were spread thinly on trays in a constant temperature and humidity apparatus adj usted to the prescribed conditions and kept standing. The powders were taken out after 3 hours and analyzed. The conditions and the results are shown in Table 2. In the initial period (before the treatment in the constant temperature and humidity apparatus), the amount of the remaining N-vinylpyrrolidone (NVP) was 5000 ppm and the remaining amount of 2-pyrrolidone (2-py) was 0.2 ppm, the hue (APHA) was 5.

Table 2

| | Example 9 | Example 10 | Comparative Example 3 | Comparative Example 4 |
|---|---|---|---|---|
| Average particle diameter (mm) | 150 | 150 | 700 | 150 |
| Temperature (°C) | 90 | 90 | 90 | 90 |
| Relative humidity (%RH) | 70 | 60 | 70 | 20 |
| NVP (ppm) | 3 | 9 | 100 | 3300 |
| 2-py(ppm) | 0.1 | 0.1 | 0.2 | 0.2 |
| APHA | 5 | 5 | 5 | 5 |

The present application claims priority under 35 U.S.C. § 119 to Japanese Patent Application No.2004-087741 filed March 24, 2004, entitled "N-VINYLAMIDE POLYMER AND PRODUCTION METHOD THEREOF." and Japanese Patent Application No.2004-087742 filed March 24, 2004, entitled "N-VINYLAMIDE POLYMER AND PRODUCTION METHOD THEREOF."

## Claims

1. A method of producing N-vinylamide polymer comprising a step of polymerizing a monomer component in a water-based solvent,
**wherein**
said polymerization step is carried out by adjusting a monomer concentration in a reaction solution to 55 to 90 % by weight and using an azo initiator and/or hydrogen peroxide.

2. The method according to Claim 1,
**wherein**
the polymerization step is carried out by maintaining a temperature of the reaction solution at 100 °C or higher for a period of from 3 to 45 minutes.

3. The method according to Claim 1 or 2,
**wherein**
the polymerization step is carried out by providing a depth of the reaction solution at 50 mm or shallower.

4. The method according to any one of Claims 1 to 3,
**wherein**
the method comprises a step of additional treatment of the N-vinylamide polymer in a powder state wherein the powder particles comprise a particle size of 500 μm or smaller; or
comprises a step of additional treatment of the N-vinylamide polymer in a film-like state wherein the film comprises a film thickness of 10 mm or thinner;

wherein both additional treatment steps are performed in an environment condition comprising a relative humidity of 50% or higher.

**5.** The method according to Claim 4,
**wherein**
the powdery or film-like N-vinylamide polymer is maintained during said additional treatment step at a temperature in a range of from 50 °C to 150 °C.

**6.** The method according to Claim 4 or 5,
**wherein**
the powdery N-vinylamide polymer is stirred and/or fluidized within a gas current during said additional treatment step.

## Patentansprüche

**1.** Verfahren zur Herstellung von N-Vinylamid-Polymer,
mit einem Verfahrensschritt,
in dessen Verlauf eine Monomer-Komponente in einem Lösemittel auf Wasserbasis polymerisiert wird,
**dadurch gekennzeichnet, dass**
bei der Ausführung dieses Polymerisations-Verfahrensschrittes in der Reaktionslösung eine Monomer-Konzentration von 55 bis 90 Gew.-% eingestellt wird; und
ein Azo-Initiator und/oder Wasserstoffperoxid eingesetzt wird.

**2.** Verfahren nach Anspruch 1,
**dadurch gekennzeichnet, dass**
bei der Ausführung dieses Polymerisations-Verfahrensschrittes die Temperatur der Reaktionslösung für eine Zeitspanne von 3 bis 45 Minuten bei 100 °C oder höher gehalten wird.

**3.** Verfahren nach Anspruch 1 oder 2,
**dadurch gekennzeichnet, dass**
bei der Ausführung dieses Polymerisations-Verfahrensschrittes die Schichtdicke der Reaktionslösung bei 50 mm oder flacher gehalten wird.

**4.** Verfahren nach einem der Ansprüche 1 bis 3,
**dadurch gekennzeichnet, dass**
das Verfahren einen Verfahrensschritt zur zusätzlichen Behandlung von pulverförmigem N-Vinylamid-Polymer umfasst,
wobei die Pulverteilchen eine Teilchengröße von 500 μm oder kleiner aufweisen; oder
das Verfahren einen Verfahrensschritt zur zusätzlichen Behandlung von schichtförmigem N-Vinylamid-Polymer umfasst, wobei die Polymerschicht eine Schichtdicke von 10 mm oder weniger aufweist;
wobei jeder dieser Verfahrensschritte zur zusätzlichen Behandlung in einer Umgebung ausgeführt wird, in der eine relative Luftfeuchtigkeit von 50 % oder höher herrscht.

**5.** Verfahren nach Anspruch 4,
**dadurch gekennzeichnet, dass**
das pulverförmige N-Vinylamid-Polymer oder das schichtförmige N-Vinylamid-Polymer während dieses Verfahrensschrittes zur zusätzlichen Behandlung bei einer Temperatur im Bereich von 50 °C bis 150 °C gehalten wird.

**6.** Verfahren nach Anspruch 4 oder 5,
**dadurch gekennzeichnet, dass**
das pulverförmige N-Vinylamid-Polymer während dieses Verfahrensschrittes zur zusätzlichen Behandlung gerührt und/oder in einem Gasstrahl aufgewirbelt wird.

## Revendications

**1.** Un procédé pour la production de polymère de N-vinylamide se composant
d'une étape de polymérisation d'un composant de monomère dans une solution à base d'eau

**caractérisé en ce que**
l'étape de polymérisation consiste à régler la concentration en monomère dans la solution de réaction à 55 à 90 pour cent en poids et à utiliser un initiateur azoïque et/ou du peroxyde d'hydrogène.

**2.** Le procédé conformément à la revendication 1,
**caractérisé en ce que**
l'étape de polymérisation consiste à maintenir la température de la solution de réaction pendant une durée de 3 à 45 minutes à 100°C ou plus élevée.

**3.** Le procédé conformément à la revendication 1 ou 2,
**caractérisé en ce que**
l'étape de polymérisation consiste à maintenir l'épaisseur de la couche de la solution de réaction à 50 mm ou moins.

**4.** Le procédé conformément à une des revendications 1 à 3,
**caractérisé en ce que**
le procédé se compose d'une étape additionnelle de traitement du polymère de N-vinylamide dans un état poudreux, les particules de cette poudre ayant une taille de particules de 500 μm ou moins ; ou que
le procédé se compose d'une étape additionnelle de traitement du polymère de N-vinylamide en couche dont la couche de polymère a une épaisseur de 10 mm ou moins ;
chaque étape additionnelle de traitement étant réalisée dans un environnement dont l'humidité relative est de 50 pour cent ou plus élevée.

**5.** Le procédé conformément à la revendication 4,
**caractérisé en ce que**
le polymère de N-vinylamide en poudre ou le polymère de N-vinylamide en couche est maintenu pendant cette étape additionnelle de traitement à une température dans la plage de 50 à 150 °C.

**6.** Le procédé conformément à la revendication 4 ou 5,
**caractérisé en ce que**
le polymère de N-vinylamide en poudre est agité et/ou introduit dans un lit fluidisé par jet de gaz pendant cette étape additionnelle de traitement:

Fig. 1

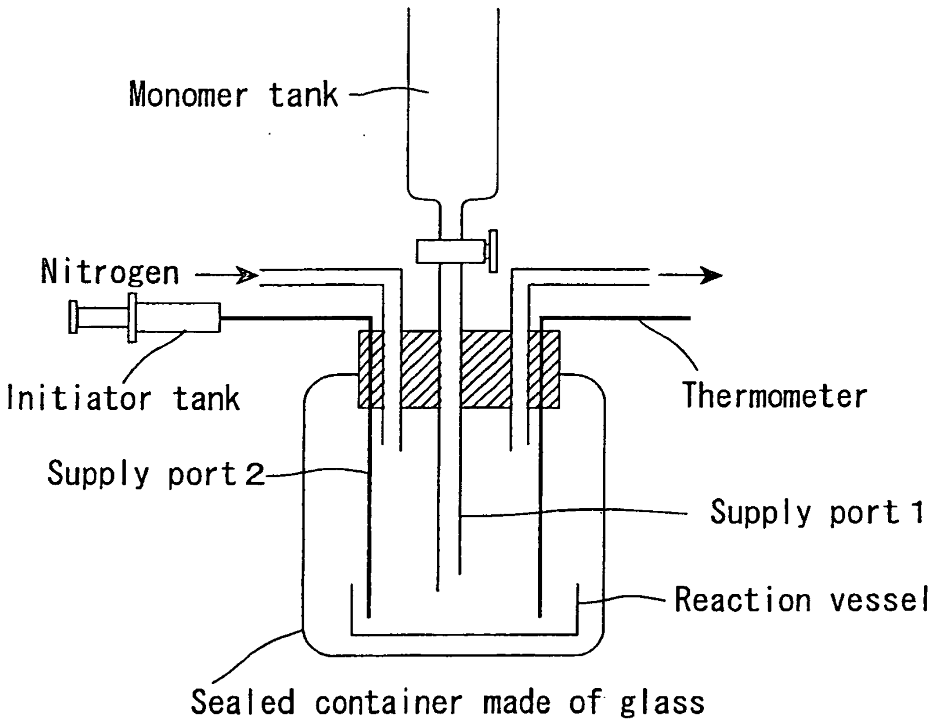
Monomer tank
Nitrogen
Initiator tank
Thermometer
Supply port 2
Supply port 1
Reaction vessel
Sealed container made of glass

Fig. 2

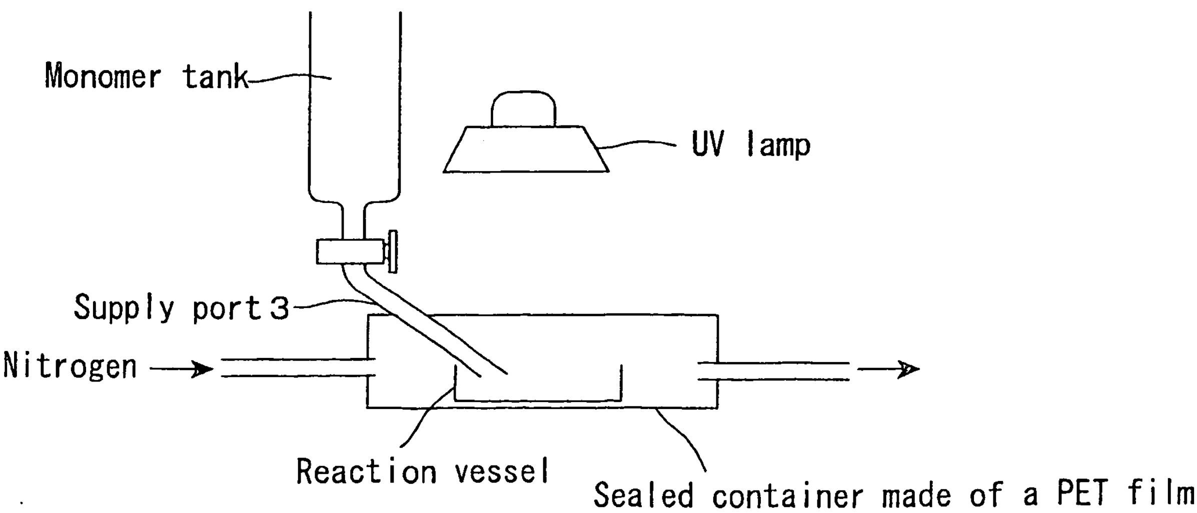
Monomer tank
UV lamp
Supply port 3
Nitrogen
Reaction vessel
Sealed container made of a PET film

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI9110912 B
- JP SHO5182387 B
- JP SHO63156810 B
- JP 2002069115 A
- JP SHO462094 B
- JP SHO61155405 B
- JP 2000034307 A
- JP SHO5247084 B
- JP SHO10101886 B
- JP 2001048938 A
- JP SHO6368609 B
- JP HEI5239118 B
- JP SHO6426604 B
- JP SO51126284 B
- JP 2004087741 A
- JP 2004087742 A